# EUROPÄISCHE PATENTSCHRIFT

(11) **EP 0 967 114 B1**
(45) Veröffentlichungstag und Bekanntmachung des Hinweises auf die Patenterteilung: **06.08.2003**
(21) Anmeldenummer: 99109473.1
(22) Anmeldetag: 12.05.1999
(51) Int. Cl.: B60N 2/44

(54) **Sitz- und/oder Liegevorrichtung, insbesondere Fahr- oder Flugzeugsitz**
Device for sitting in and/or lying on, particularly vehicle or aircraft seat
Dispositif pour s'asseoir et/ou s'allonger, en particulier siège de véhicule ou d'avion

(30) Priorität: 25.06.1998 DE 19828254
(43) Veröffentlichungstag der Anmeldung: 29.12.1999
(73) Patentinhaber: DaimlerChrysler AG, 70567 Stuttgart (DE)
(72) Erfinder: Becker, Norbert Dr., 72074 Tübingen (DE); Fussnegger, Wolfgang, 72074 Tübingen (DE)

(56) Entgegenhaltungen:
- DE-A- 2 209 744
- DE-A- 2 400 119
- DE-A- 3 515 631
- DE-A- 4 140 935
- DE-A- 4 341 070
- FR-A- 2 127 792

## Beschreibung

Die Erfindung betrifft eine Sitz- und/oder Liegevorrichtung, insbesondere einen Fahr- oder Flugzeugsitz, der im Oberbegriff des Patentanspruchs 1 angegebenen Gattung (siehe z.B. DE 24 00 119 A1).

Bei einem bekannten Sitz für Fahrzeuge oder dgl. (DE 22 09 744 A1) weist der Unterrahmen einen vorderen, einen rückwärtigen und zwei seitliche Rahmenteile auf, und eine nachgiebige bzw. elastische Grund- oder Bodenplatte steht mit einem oder mehreren dieser Rahmenteile in Verbindung, während sie von den übrigen Teilen des Rahmens getrennt und mit diesen über elastische Elemente, z.B. Schraubenfedern verbunden ist. In einer Ausführung dieses Sitzes sind die elastischen Elemente als gewellte und damit entsprechend nachgiebige Abschnitte der Bodenplatte ausgebildet, so daß eine abwärts gerichtete Druckbeaufschlagung durch das Gewicht des Sitzenden ein Nachuntendrücken der beiden flexiblen Abschnitte und eine in Abwärtsrichtung erfolgende Auslenkung der Bodenplatte bewirkt. Das Polster, z.B. aus geschäumtem Urethangummi, ist auf den Rahmen aufgebracht, wobei Rahmen und Polster mit einer Umhüllung, z.B. aus Vinylleder, überzogen sind.

Ein solcher Sitz hat den Nachteil, daß das Polster zu dick ist und sich nach längerer Belastung durchsitzt. Ein regelrechter Widerstand auf die für das richtige Sitzen erforderliche anatomische Struktur des Körpers ist nicht gewährleistet. Auch sitzt man dann nicht im Zweipunktsitz auf den Sitzbeinhöckern, die dazu geschaffen sind, sondern rutscht auf die Steißbeinspitze, und das Steißbein und sitzt im sog. Dreipunktsitz, was zu einem erheblichen Unwohlsein führt. Die Folge davon ist ein stetes Verlangen nach ständigem Umändern der Körperposition im Sitz, was bei einem Autositz zu mangelnder Aufmerksamkeit im Straßenverkehr, zu Unwohlsein und schneller Ermüdung sowie Gereiztheit führen kann. Bei einem Flugzeugsitz führt dies zu mangelndem Sitzgefühl, Schmerzen im Bereich der Wirbelsäule und Behinderung des Einschlafens bei Langzeitflügen, so daß der Körper sich während des Fluges nicht ausruhen kann und am Zielort erhebliche Ermüdungserscheinungen auftreten. Bei einem erkrankten Menschen mit z.B. neuropathischen Veränderungen kann ein solcher Dreipunktsitz zu einem Dekubitus, bei Wunden sonstiger Genese, wie z.B. bei Verbrennungen, zu Wundheilungsstörungen führen.

Bei einer bekannten Rückenlehne mit Lehnenrahmen, Polster und Rückenschale für einen Kraftfahrzeugsitz (DE 35 15 631 A1) ist ein einfacher Aufbau mit geringer Bautiefe dadurch erreicht, daß die nach vorn vom Polster abgedeckte Rückenschale einen der Befestigung am Lehnenrahmen und einen sich daran zum flächigen Mittelteil hin anschließenden, elastischen Übergangsbereich besitzt, der vorzugsweise ein im Querschnitt wellenförmiges, eine federnde Bewegung des Mittelteils senkrecht zur Hauptebene der Rückenlehne zulassendes Profil aufweist.

Bei einer bekannten Sitz- oder Liegevorrichtung der eingangs genannten Art (DE 24 00 119 A1) ist das mit seinem vorderen und hinteren Ende am Sitzrahmen festgelegte Basisteil eine Matte aus federndem, im wesentlichen in sich undehnbarem Material, z.B. aus Federstahlblech, die ihre Flexibilität in Längsrichtung durch quer zur Längsrichtung eingebrachte Dehnwellen, die im gleichen Abstand zueinander eingebracht sind, erhält. Die Dehnwellen haben V- oder U-förmiges Profil und sind einstückig aus dem Federblech in der Weise ausgeformt, daß ihre V- oder U-Öffnungen nach oben weisen. Bei Belastung der Matte durch einen Sitzenden vergrößert sich die Öffnungsweite der Dehnwellen und läßt so eine Dehnung der Matte in Längsrichtung zu. Eine weitere Matte ist im Lehnenrahmen aufgespannt, wobei die parallel zu den Dehnwellen sich erstreckenden Endkanten der Matte an den beiden vertikal verlaufenden Längsholmen des Lehnenrahmens festgelegt sind.

Der Erfindung liegt die Aufgabe zugrunde, eine Sitz- und/oder Liegevorrichtung der eingangs genannten Art zu konstruieren, bei der der Körper des Benutzers anatomisch richtig derart abgestützt wird, daß der Körper sich entspannen kann und keine Druckstellen entstehen.

Die Aufgabe ist erfindungsgemäß durch die Merkmale des Patentanspruchs 1 gelöst.

Die erfindungsgemäße Sitz- und/oder Liegevorrichtung hat den Vorteil, daß durch das Basisteil aus quersteifem, aber längsflexiblem Material, wie Federstahl, Carbon-, Glas- oder Kevlarfasern, Titan u.dgl., ein anatomisch richtiges Sitzen mit hohlgelegter und damit weniger belasteter Kreuz-Steißbeinregion und axial belasteter Sitzbeinhöckerregion gewährleistet ist und gleichzeitig eine Grundstruktur für das sich dem Körper anpassende Polster zur Verfügung steht, die zwar eine gewisse Steifigkeit besitzt, die aber ständig verändert werden und sich den momentanen Sitzwünschen anpassen kann, so z.B. beim ermüdeten Sitzenden, der in sich zusammengesunken nach vorn rutscht. Das quersteife und längsflexible Basisteil stellt sich dann so ein, daß die Sitzbeinhöcker das Basisteil wiederum axial belasten. Auf diese harte querstabile, aber längsflexible Grundstruktur wird das Polster, das den anatomischen Anforderungen entspricht und die Druckisobaren des Körpers beim Sitzen in verschiedenen Positionen abpolstert, aufgezogen. Das längsflexible, aber steife Basisteil läßt sich in das Polster einlegen, am Unterrahmen aufhängen, läßt sich verstellen und/oder sich als Ganzes abfedern. Durch zusätzliche Mechanismen, die an der Aufhängung des Basisteils am Unterrahmen angebracht sind, läßt sich die Wölbung im Bereich der Längsflexibilität verstellen und dem momentanen Sitzwunsch anpassen. Das Polster kann aus Schaum, Gummihaar, aus atmungsaktivem Material, aus gelochtem Silikonüberzug, aus Luftkammern u.dgl., bestehen. Insgesamt vereinigt die erfindungsgemäße Sitz- und/oder Liegevorrichtung die positiven Eigenschaften der anatomischen Sitzgestaltung mit den positiven Elementen der individuellen Nachjustierbarkeit, wobei so wenig Material wie möglich und so viel Material wie nötig verwendet wird.

Vorteilhafte Ausführungsformen der erfindungsgemäßen Sitz- und/oder Liegevorrichtung mit zweckmäßigen Ausgestaltungen der Erfindung ergeben sich aus den weiteren Ansprüchen.

Die Erfindung ist anhand von in der Zeichnung dargestellten Ausführungsbeispielen im folgenden näher beschrieben. Es zeigen jeweils in schematischer Darstellung:
- Fig. 1: einen Längsschnitt eines Sitzteils eines Fahrzeugsitzes,
- Fig. 2: eine gleiche Darstellung wie in Fig. 1 eines Sitzteils gemäß einem weiteren Ausführungsbeispiel,
- Fig. 3: ausschnittweise ein Basisteil im Sitz gemäß Fig. 1 oder 2,
- Fig. 4A und 4B: jeweils eine Seitenansicht eines Sitzes mit Sitzendem zur Verdeutlichung der Funktion des Sitzes gemäß Fig. 1 oder 2 in zwei verschiedenen Sitzhaltungen des Sitzenden,
- Fig. 4C: ausschnittweise einen Querschnitt des mit einem Sitzenden belegten Sitzes in Fig. 4A und 4B,
- Fig. 4D: eine gleiche Darstellung wie in Fig. 4C eines herkömmlichen Seriensitzes,
- Fig. 5 bis 7: jeweils ausschnittweise einen Längsschnitt eines Basisteils im Sitz gemäß Fig. 1 oder 2 in drei verschiedenen Ausführungsvarianten,
- Fig. 8: jeweils einen Längsschnitt eines Fahrzeugsitzes mit Sitzteil und Rückenlehne in Fahrstellung (Fig. 8A) und gekippter Ruhestellung (8B),
- Fig. 9 bis 11: jeweils einen Längsschnitt eines Fahrzeugsitzes gemäß drei weiteren Ausführungsbeispielen,
- Fig. 12: einen Längsschnitt einer Rückenlehne eines Fahrzeugsitzes gemäß einem weiteren Ausführungsbeispiel,
- Fig. 13: ausschnittweise einen Schnitt längs der Linie XIII-XIII in Fig. 12,
- Fig. 14: einen Längsschnitt eines Sitzes gemäß einem weiteren Ausführungsbeispiel.

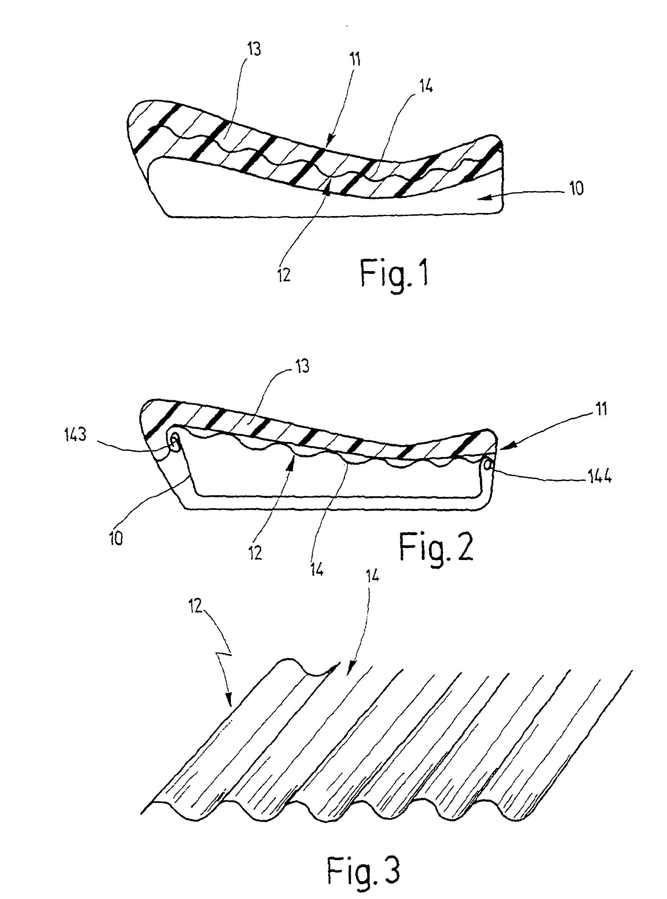

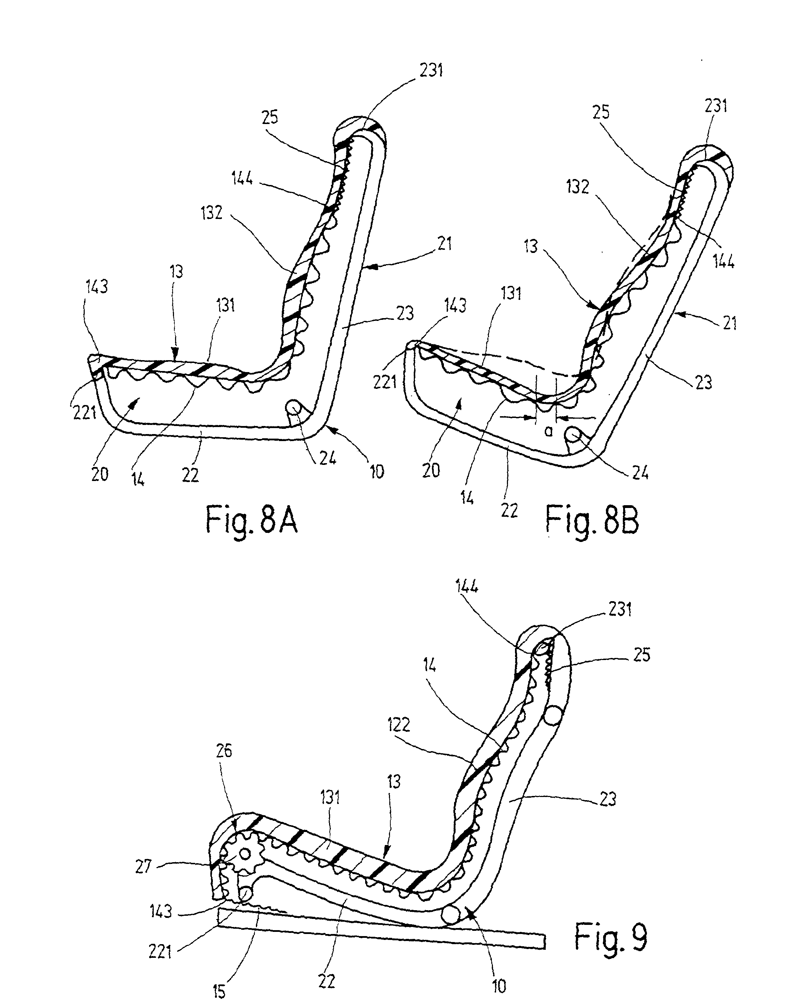

Die beiden in Fig. 1 und 2 schematisch im Längsschnitt dargestellten Sitzteile eines Fahrzeugsitzes als Beispiel für eine allgemeine Sitz- und/oder Liegevorrichtung, zu der auch ein Flugzeugsitz mit zur Entspannung nach hinten kippbarer Rückenlehne, ein orthopädischer Sitz oder eine orthopädische Liege, ein Rollstuhl u.dgl. zu zählen sind, weisen jeweils einen stabilen Unterrahmen 10 und eine nachgiebige Auflage 11 auf, die sich aus einem Basisteil 12 und einem Polster 13 zusammensetzt. Das Basisteil 12 ist quersteif und längsflexibel ausgebildet und wird im Ausführungsbeispiel von einem dünnen, gewellten Federblech 14 gebildet, dessen Wellenhöhe und Werkstoffdicke sich nach Werkstoffauswahl und Belastung richtet. Der Ausdruck Federblech wird im folgenden und in den Patentansprüchen als Synomym für eine dünne flexible Platte oder Folie gebraucht und charakterisiert nicht das Material der dünnen Platte oder Folie. Als Material für das Wellfederblech kommt Federstahl, Carbon-, Glas- oder Kevlarfasern oder Titan in Frage. In Fig. 3 ist das als Wellfederblech 14 ausgebildete Basisteil 12 ausschnittweise perspektivisch dargestellt. Das Profil der Wellung ist hierbei sinusförmig ausgeführt. In Fig. 5, 6 und 7 sind weitere Beispiele für das Wellenprofil des Wellfederblechs 14 dargestellt. In Fig. 5 ist das Wellenprofil rechteckförmig, in Fig. 6 dreieckförmig mit abgerundeten Spitzen und in Fig. 7 ist dem dreieckförmigem Wellenprofil eine zweite Wellung mit wesentlich kleinerer Wellperiode überlagert. Wie in Fig. 5 angedeutet ist, können in den vom Polster 13 aus gesehenen Wellentälern 141 des Wellenfederblechs 14 noch luftgefüllte Schläuche 15 eingelegt sein.

In dem Ausführungsbeispiel der Fig. 1 ist das Wellfederblech 14 innerhalb des Polsters 13 eingebettet und das Polster 13 mit dem Unterrahmen 10 verbunden. Bevorzugt wird dabei das Polster 13 als ein das Wellfederblech 14 umschließender Schaumstoffkern ausgebildet, wobei das Wellfederblech 14 gelocht ist um das Einschäumen zu ermöglichen.

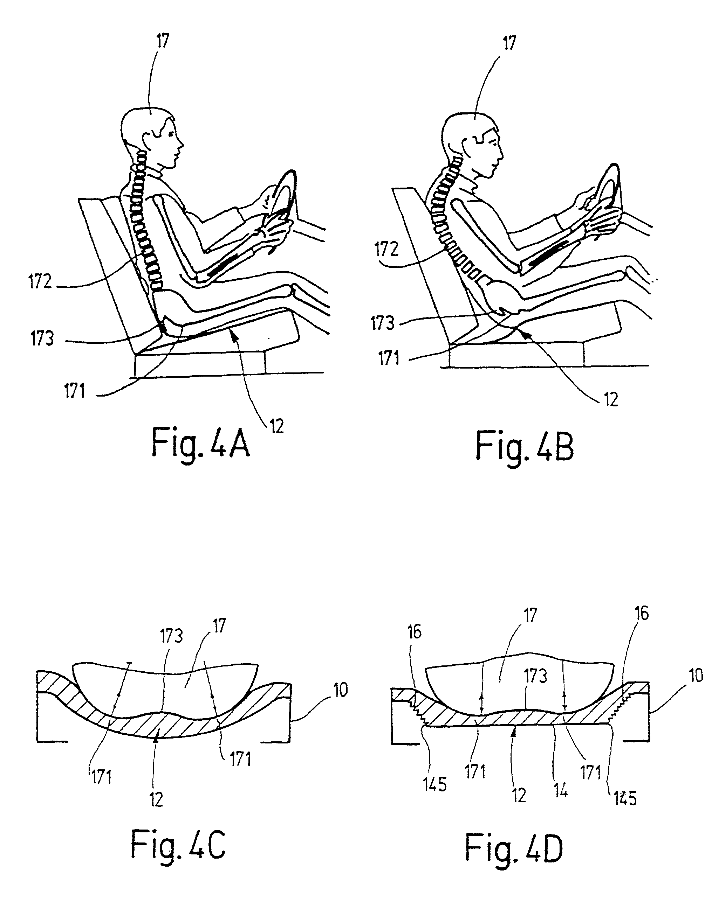

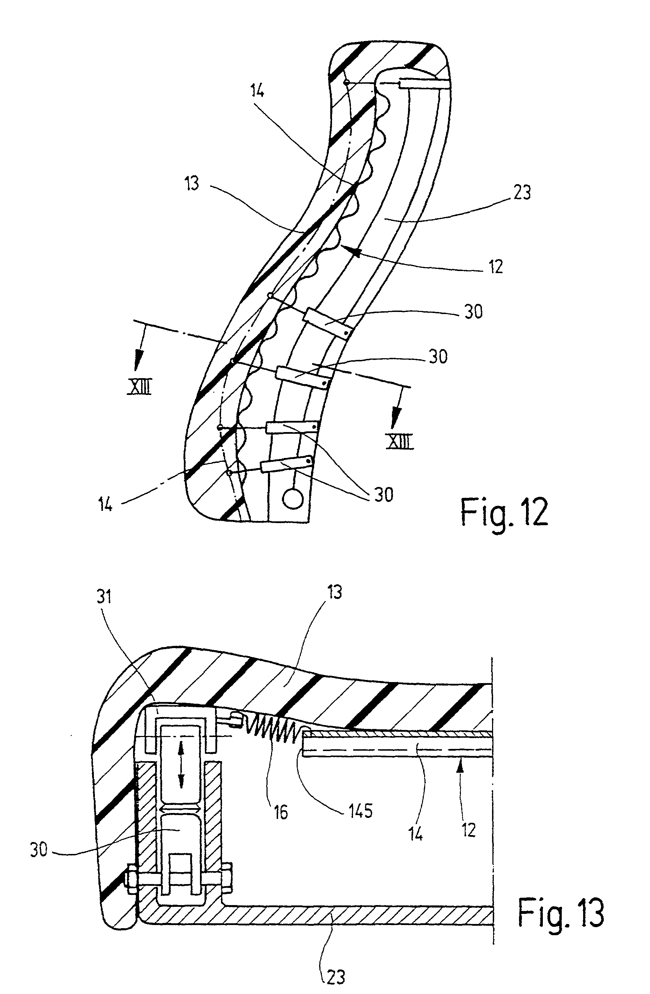

Im Ausführungsbeispiel der Fig. 2 ist das Wellfederblech 14 an seinen quer zur Wellung sich erstreckenden Endkanten 143,144 am Unterrahmen 10 eingehängt, und das Polster 13 liegt auf dem Wellfederblech 14 unmittelbar auf. Zusätzlich kann - wie dies nur in Fig. 13 und 4C zu sehen ist - das Wellfederblech 14 an seinen parallel zur Wellung verlaufenden Längskanten 145 am Unterrahmen 10 mittels federelastischer Elemente, vorzugsweise Zugfedern 16, befestigt werden.

In Fig. 4A, 4B, 4C und 4D ist schematisch die Verlagerung des Basisteils 12 im Sitzteil gemäß Fig. 4A oder 4B bei Sitzbelastung durch einen Sitzenden 17 in zwei unterschiedlichen Sitzhaltungen dargestellt. Die Belastung der Sitzbeinhöcker 171 ist in beiden Sitzhaltungen orthopädisch richtig (nicht die Sitzhaltung). Der Druck kommt von unten axial auf die Sitzbeinhöcker 171 des Sitzenden 17, und das Hohlsitzen der Kreuz-Steißbeinregion 173 ist gewährleistet. In Fig. 4C und 4D ist ebenfalls schematisch die Verlagerung des Basisteils 12 im Sitzteil bei Sitzbelastung durch einen Sitzenden 17 dargestellt. Bei Fig. 4D kommt der Druck von unten senkrecht auf die Sitzbeinhöcker 171 des Sitzenden 17. Im Gegensatz hierzu wölbt sich bei dem in Fig. 4C skizzierten Sitzteil eines herkömmlichen Fahrzeugsitzes die Basisplatte 12, da sie nicht quersteif wie beim Sitz gemäß 4D ist, in der Mitte stärker durch, und der Druck kommt nicht senkrecht sondern schräg von unten auf die Sitzbeinhöcker 171. Der Sitzende 17 fühlt sich eingeengt und spürt Druckbelastungen am seitlichen Becken. Bei dem Sitz 4D mit eingezogenem Wellfederblech 14 wird durch die Querversteifung der Wellen ein Durchhängen in der Mitte verhindert und durch dessen Längsflexibilität eine Federung garantiert, sowie eine Anpassung an das Sitzverhalten gewährleistet. Welche der in Fig. 3 und 5 bis 7 dargestellten Wellenprofile beim Wellfederblech 14 verwendet wird, richtet sich nach dem Federungscharakter des Werkstoffs und der Beanspruchung des Sitzes. Die in Fig. 5 dargestellten, eingelegten, luftgefüllten Schläuche 15 übernehmen z.B. Massagefunktion. In Fig. 4A sitzt der Sitzende aufrecht und aufmerksam. Er stützt sich mit den Sitzbeinhöckern 171 ab. Die Wirbelsäule 172 ist an der Rückenlehne 21 abgestützt. In Fig. 4B ist der Sitzende müde, in sich zusammengesunken und rutscht nach vorn. Dabei käme bei einem Standardsitz das Kreuz- und Steißbein unter Druck, was unangenhem wird und zu Beschwerden und Unwohlsein führt. Bei dem hier vorgestellten neuartigen Sitz hingegen stellt sich das Basisteil selbständig so ein, daß wiederum die Sitzbeinhöcker 171 axial belastet werden.

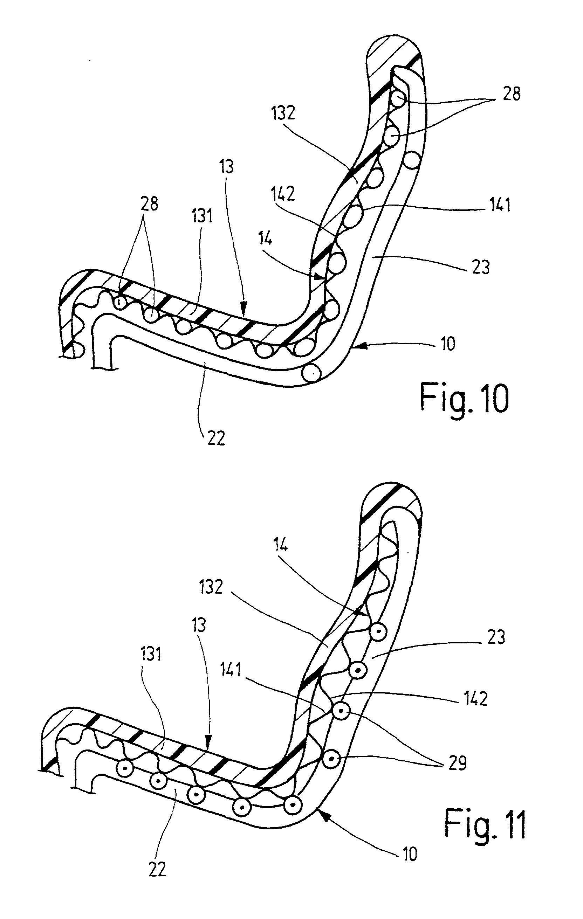

In Fig. 8 ist ein Fahrzeugsitz mit Sitzteil 20 und Rückenlehne 21 im Längsschnitt schematisch dargestellt. Der Unterrahmen 10 besteht aus einem Sitzrahmen 22 des Sitzteils 20 und aus einem Lehnenrahmen 23 der Rückenlehne 21, die starr miteinander verbunden sind. Alternativ kann der Lehnenrahmen auch schwenkbar am Sitzrahmen festgelegt sein, um in eine der Entspannung dienende Liegevorrichtung umgestellt werden zu können. Der gesamte Unterrahmen 10 ist um eine quer zur Sitzrichtung sich erstreckende Kippachse 24 kippbar und kann aus einer sog. Fahrstellung (Fig. 8A) in eine der Entspannung dienende Ruhelage (Fig.8B) abgeschwenkt werden. Das Wellfederblech 14 ist mit seiner vorderen, quer zur Wellung verlaufenden Endkante 143 an einer vorderen Querstrebe 221 des Sitzrahmens 22 und mit seiner hinteren, quer zur Wellung verlaufenden Endkante 144 mittels Federelemente 25 an einem oberen Querholm 231 des Lehnenrahmens 23 eingehängt. Im Ausführungsbeispiel der Fig. 8 kann auch auf die Federelemente 25 verzichtet und das Wellfederblech 14 mit seiner Endkante 144 unmittelbar an dem oberen Querholm 231 festgelegt werden, wie dies in den Ausführungsbeispielen der Fig. 10 und 11 der Fall ist . Das Polster 13 überzieht einstückig das Wellfederblech 14 und bildet mit seinem vorderen Abschnitt das Sitzpolster 131 und mit seinem hinteren Abschnitt das Lehnenpolster 132. Wird der Fahrzeugsitz in die Ruheposition geschwenkt, so wird das Becken um den Betrag a in Fig. 8B nach vorn geschoben. Das Wellfederblech 14 geht mit der veränderten Sitzposition mit, so daß der Sitzende wieder orthopädisch richtig sitzt. Die Veränderung der Lage von Wellfederblech 14 und Polster 13 ist in Fig. 8B verdeutlicht, wobei die strichliniert eingezeichnete Kontur den Verlauf der Polsteroberfläche bei in Fahrstellung befindlichem Sitz gemäß Fig. 8A andeutet.

Bei dem in Fig. 9 im Längsschnitt skizzierten weiteren Ausführungsbeispiel eines Fahrzeugsitzes mit Sitzteil 20 und Rückenlehne 21 ist der Unterrahmen 10 wiederum einstückig aus Sitzrahmen 22 und Lehnenrahmen 23 zusammengesetzt und das Wellfederblech 14 mit seinen Endkanten 143,144 über Federelemente 25 an der vorderen Querstrebe 221 des Sitzrahmens 22 und am oberen Querholm 231 des Lehnenrahmens 23 festgelegt. Das Polster 13 mit seinen Sitzpolster 131 und Lehnenpolster 132 bildenden Abschnitten liegt unmittelbar auf dem Wellfederblech 14 auf. Zur Sitztiefenverstellung ist dem Wellfederblech 14 eine Verstellvorrichtung 26 zugeordnet, mittels welcher das Wellfederblech 14 längsverschiebbar, d.h. verschiebbar in Richtung der Wellung, ist. Die Verstellvorrichtung 26 weist eine an oder nahe der vorderen Querstrebe 221 des Sitzrahmens 22 angeordnete, sich quer über das Wellfederblech 14 erstreckende Antriebswalze 27 auf, die mit einem dem Wellenpofil angepaßten Nockenprofil in das Wellfederblech 14 eingreift. Das Wellfederblech 14 ist um die Antriebswalze 27 herumgeführt, so daß ein ausreichender Abschnitt des Wellfederblechs 14 mit dem Nockenprofil der Antriebswalze 27 in Eingriff ist. Wird die Antriebswalze 27 in die eine oder andere Drehrichtung gedreht, so wird das Wellfederblech 14 in die eine oder andere Richtung unter Dehnung des einen oder anderen Federelements 25 verschoben und damit die Sitztiefe verkürzt oder verlängert.

Bei den in Fig. 10 und 11 schematisch im Längsschnitt dargestellten Fahrzeugsitzen mit Sitzteil 20 und Rückenlehne 21 ist anstelle einer Sitztiefenverstellung eine Massageeinrichtung vorgesehen. Das Wellfederblech 14 ist - wie hier nicht weiter dargestellt - mit seinen quer verlaufenden Endkanten wiederum an der vorderen Querstrebe des Sitzrahmens 22 und an dem oberen Querholm des Lehnenrahmens 23 aufgehängt und von dem Polster 13 abgedeckt. In dem vom Polster 13 aus gesehenen Wellentälern 141 des Wellfederblechs 14 sind in Fig. 10 Luftschläuche 28 eingelegt, die an eine hier nicht dargestellte Druckluftvorrichtung zum wahlweise individuellen Einstellen ihres Luftdruckes angeschlossen sind. Durch Variation des Luftdruckes wird eine Druckpunktveränderung ermöglicht und so eine Massagewirkung erzielt und die Härte des Sitzes beeinflußt.

Die Massagewirkung in dem Ausführungsbeispiel der Fig. 11 wird mit einer Vielzahl von Exzenterwalzen 29 erzielt, die drehbar am Sitzrahmen 22 und am Lehnenrahmen 23 angeordnet sind. Jede Exzenterwalze 29 legt sich dabei an einen Wellenberg 142 des Wellfederblechs 14 an. Die einzelnen Exzenterwalzen 29 werden mittels eines hier nicht dargestellten Zahnriehmens angetrieben. Bei der Rotation der Exzenterwalzen 29 drücken diese auf das Wellfederblech 14 und verstärken oder verringern so den Druckpunkt.

In Fig. 12 und 13 ist schematisch die Rückenlehne 21 eines weiteren Ausführungsbeispiels eines Fahrzeugsitzes im Längsschnitt (Fig. 12) und ausschnittsweise im Querschnitt (Fig. 13) dargestellt. Am Lehnenrahmen 23 ist eine Vielzahl von Verstellgliedern 30 angeordnet, die in Sitzrichtung, also in Richtung Sitztiefe, verschiebbar ausgebildet sind und an dem Wellfederblech 14 angreifen. Mit jedem freien Ende eines Verstellglieds 30 ist eine Kappe 31 fest verbunden, an der eine Zugfeder 16 festgelegt ist, die mit ihrem anderen Ende an der Längskante 145 des Wellfederblechs 14 eingehängt ist. Das Wellfederblech 14 ist damit längs seiner beiden Längskanten 145 im Bereich des Lehnenrahmens 23 über eine Vielzahl von Zugfedern 16 an eine entsprechende Anzahl von Verstellgliedern 30 befestigt. Die Verstellglieder 30 können pneumatisch, elektrisch, hydraulisch oder mechanisch angetrieben sein, und sich dabei mehr oder weniger von Lehnenrahmen 23 aus vorschieben. Mit ihrer Verstellung ist eine Verstellung der Rückenabstützung möglich, wie dies in Fig. 12 durch die strichpunktiert dargestellte Kontur des Wellfederblechs 14 angedeutet ist. Die einzelnen Kappen 31 an den Verstellgliedern 30 können auch einstückig miteinander verbunden sein und bilden dann einen flexiblen Verstellrahmen, der über die Verstellglieder 30 verschiebbar am Lehnenrahmen 23 festgelegt ist.

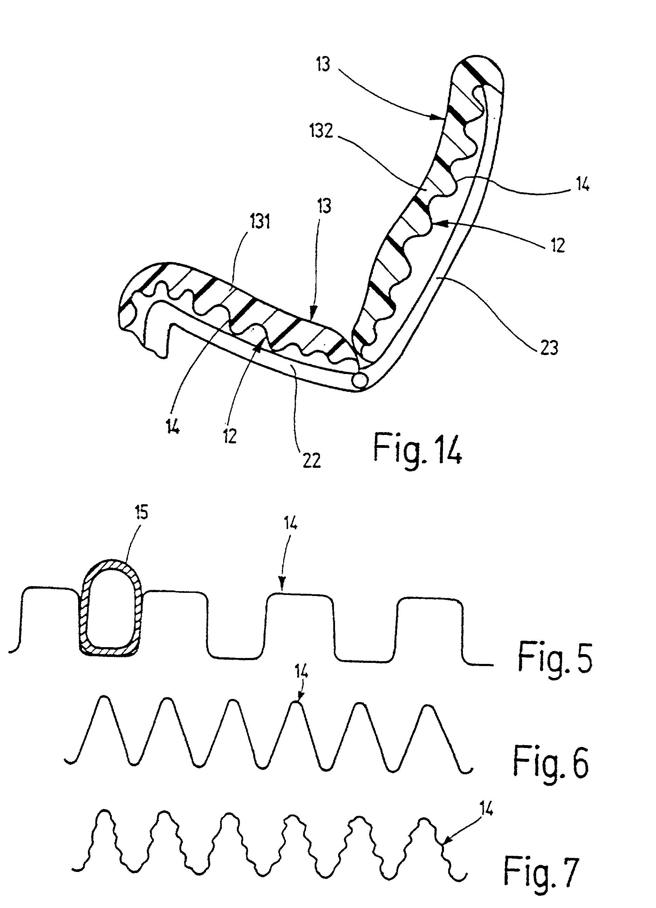

Bei dem in Fig. 14 im Längsschnitt schematisch dargestellten Sitz sind das quersteife und längsflexible Basisteil 12 und das Polster 13 für Sitzteil 20 und Rückenlehne 21 getrennt voneinander ausgeführt, wobei das Wellfederblech 14 jeweils gesondert wie beschrieben am Sitzrahmen 22 und am Lehnenrahmen 23 festgelegt ist. Die hier nicht dargestellten Federelemente und ggf. Verstellvorrichtung sind dabei jeweils für Sitzteil 20 und Rückenlehne 21 vorzusehen. Der Lehnenrahmen 23 ist schwenkbar am Sitzrahmen 22 gehalten und kann in jeder beliebigen Schwenkstellung arretiert werden, so daß der Sitz auch als Liegevorrichtung gebraucht werden kann. Sitzteil 20 und Rückenlehne 21 können zusätzlich noch so konzipiert werden, daß die beiden Basisteile 12 mit Sitzpolster 131 und Lehnenpolster 132 aus dem Sitzrahmen 22 und Lehnenrahmen 23 leicht lösbar sind und herausgenommen werden können.

Die Erfindug ist nicht auf das beschriebene Ausführungsbeispiel enes Fahrzeugsitzes beschränkt. Bei entsprechendem Neigungswinkel zwischen Sitzteil und Rückenlehne ist eine Verwendung als Liege möglich.

Neben den bereits erwähnten Anwendungsfällen ist auch die Möglichkeit einer gleichen Konzeption eines Rollstuhls hervorzuheben. Ein solcher Rollstuhl kann damit stabiler gehalten werden, der Patient fester und sicherer darin sitzen und orthopädische Korrekturpelotten besser, sicherer und dauerhafter angewendet werden. Durch die erfindungsgemäßen Verstellmechanismen können unterschiedliche Sitz- und Liegepositionen eingestellt werden. Wird das Basisteil mit Polster aus dem Rahmen entnehmbar ausgebildet, so kann der Rollstuhl auch klappbar ausgeführt werden.

## Patentansprüche

1. Sitz- und/oder Liegevorrichtung, insbesondere Fahr- oder Flugzeugsitz, mit einem aus einem Sitzrahmen (22) eines Sitzteils (20) und einem damit verbundenen Lehnenrahmen (23) einer Rückenlehne (21) bestehenden stabilen Unterrahmen (10) und mit einem Basisteil (12), das quersteif und längsflexibel ausgebildet ist,
**dadurch gekennzeichnet,**
**daß** das Basisteil (12) von einem dünnen, gewellten Federblech (14) gebildet ist, dessen Wellung in Sitzlängsrichtung verläuft und mit seiner vorderen, quer zur Wellung verlaufenden Endkante (143) an einer vorderen Querstrebe (221) des Sitzrahmens (22) und mit seiner hinteren, quer zur Wellung verlaufenden Endkante (144) an einem oberen Querholm (231) des Lehnenrahmens (23) eingehängt ist, und daß auf dem Wellfederblech (14) ein Polster (13) aufliegt, das in einen ein Sitzpolster (131) bildenden Abschnitt und einen ein Lehnenpolster (132) bildenden Abschnitt unterteilt ist, die vorzugsweise miteinander einstückig sind.

2. Vorrichtung nach Anspruch 1,
**dadurch gekennzeichnet,**
**daß** der Unterrahmen (10) um eine quer zur Sitzrichtung sich erstreckende Schwenkachse (24) kippbar ausgebildet ist.

3. Vorrichtung nach Anspruch 1 oder 2,
**dadurch gekennzeichnet,**
**daß** am Sitzrahmen (22) eine an dem Wellfederblech (14) zu dessen Längsverschiebung in Wellenrichtung angreifende Verstellvorrichtung (26) angeordnet ist.

4. Vorrichtung nach Anspruch 3,
**dadurch gekennzeichnet,**
**daß** nahe der vorderen Querstrebe (221) des Sitzrahmens (22) eine quer über das Wellfederblech (14) sich erstreckende Antriebswalze (27) drehbar gelagert ist, die mit einem dem Wellenprofil angepaßten Nockenprofil in das Wellfederblech (14) eingreift, und daß das Wellfederblech (14) um die Antriebswalze (27) teilweise herumgeführt und mit seinen quer verlaufenden Endkanten (143,144) über Federelemente (25) am Sitzrahmen (22) und am Lehnenrahmen (23) verspannt ist.

5. Vorrichtung nach einem der Ansprüche 1 - 4,
**dadurch gekennzeichnet,**
**daß** das Wellfederblech (14) an seinen parallel zur Wellung verlaufenden Längskanten (145) am Unterrahmen (10) mittels federelastischer Elemente, vorzugsweise Zugfedern (16), befestigt ist.

6. Vorrichtung nach einem der Ansprüche 1 - 5,
**dadurch gekennzeichnet,**
**daß** das Wellenprofil des Wellfederblechs (14) rechteck-, dreieck- oder sinusförmig ausgebildet ist.

7. Vorrichtung nach einem der Ansprüche 1 - 6,
**dadurch gekennzeichnet,**
**daß** der Wellung des Wellfederblechs (14) eine Wellung mit wesentlich kleinerer Wellperiode überlagert ist.

8. Vorrichtung nach einem der Ansprüche 1 - 7,
**dadurch gekennzeichnet,**
**daß** in den vom Polster (13) aus gesehenen Wellentälern (142) des Wellfederblechs (14) luftgefüllte Schläuche (15;28) eingelegt sind.

9. Vorrichtung nach Anspruch 8,
**dadurch gekennzeichnet,**
**daß** die Luftschläuche (15;28) an einer Druckluftvorrichtung zum wahlweise, individuellen Einstellen ihres Luftdrucks angeschlossen sind.

10. Vorrichtung nach einem der Ansprüche 1 - 9,
**dadurch gekennzeichnet,**
**daß** auf der von dem Polster (13) abgekehrten Seite des Wellfederblechs (14) eine Vielzahl von Exzenterwalzen (29) drehbar am Sitz- und Lehnenrahmen (22,23) so angeordnet ist, daß jede sich quer über das Wellfederblech (14) erstreckende Exzenterwalze (29) an einem Wellenberg (142) anliegt, und daß die Exzenterwalzen (29), vorzugsweise über einen Zahnriemen, antreibbar sind.

11. Vorrichtung nach einem der Ansprüche 5 - 10,
**dadurch gekennzeichnet,**
**daß** im Bereich des Lehnenrahmens (23) die Befestigung der federelastischen Elemente, vorzugsweise der Zugfedern (16), an einer Vielzahl von am Lehnenrahmen (23) gehaltene Verstellgliedern (30) vorgenommen ist, die in Sitzrichtung verschiebbar ausgebildet sind.

12. Vorrichtung nach Anspruch 11,
**dadurch gekennzeichnet,**
**daß** die Verstellglieder (30) pneumatisch, elektrisch, hydraulisch oder mechanisch antreibbar sind.

13. Vorrichtung nach einem der Ansprüche 1 - 12,
**dadurch gekennzeichnet,**
**daß** das Wellfederblech (14) zwischen Sitzrahmen (22) und Lehnenrahmen (23) unterteilt ist und die Wellfederblechabschnitte jeweils separat im Sitz- und Lehnenrahmen (22,23) festgelegt sind.

## Claims

1. Sitting and/or reclining fitting, in particular a seat in a vehicle or aircraft, with a stable underframe (10) consisting of a seat frame (22) of a seat portion (20) and a leaning frame (23) of a backrest (21) and having a base portion (12) which is transversely rigid and longitudinally flexible,
**characterised in that**
the base portion (12) is formed of a thin, corrugated spring sheet (14) whose corrugation direction runs in the longitudinal direction of the seat and which, at its front edge (143) extending across the corrugation direction, is suspended on a front cross-strut (221) of the seat frame (22) and, at its rear edge (144) extending across the corrugation direction, is suspended on an upper cross-bar (231) of the leaning frame (23), and a cushion (13) rests on the corrugating spring sheet (14), which is divided into a section forming a seat cushion (131) and a section forming a backrest cushion (132) these preferably being formed together in one piece.

2. Fitting according to Claim 1,
**characterised in that**
the underframe (10) is made so that it can tilt about a swivel axis (24) extending transversely to the seat direction.

3. Fitting according to Claims 1 or 2,
**characterised in that**
on the seat frame (22) is arranged an adjustment device (26) which engages with the corrugated spring sheet (14), allowing it to be displaced longitudinally in the corrugation direction.

4. Fitting according to Claim 3,
**characterised in that**
close to the front cross-strut (221) of the seat frame (22) a drive roll (27) extending transversely over the corrugating spring sheet (14) is mounted and able to rotate, which engages with the corrugated spring sheet (14) with a cam profile shaped to match the corrugation profile, and the corrugating spring sheet (14) passes partly round the drive roll (27) and, with its transversely directed edges (142, 144), is stretched by spring elements (25) on the seat frame (22) and on the leaning frame (23).

5. Fitting according to any of Claims 1 to 4,
**characterised in that**
along its longitudinal edges (145) that extend parallel to the corrugation direction, the corrugated spring sheet (14) is attached to the underframe (10) by spring elements, preferably tension springs (16).

6. Fitting according to any of Claims 1 to 5,
**characterised in that**
the corrugation profile of the corrugated spring sheet (14) is rectangular, triangular or sinusoidal.

7. Fitting according to any of Claims 1 to 6,
**characterised in that**
the corrugations of the corrugated spring sheet (14) have a superimposed corrugation of substantially smaller wavelength.

8. Fitting according to any of Claims 1 to 7,
**characterised in that**
in the corrugation troughs (142) of the corrugated spring sheet (14) as viewed from the cushion (13) outwards, there are inlaid, air-filled flexible tubes (15; 28).

9. Fitting according to Claim 8,
**characterised in that**
the flexible air tubes (15; 28) are connected to a compressed air device for the optional, individual adjustment of their air pressure.

10. Fitting according to any of Claims 1 to 9,
**characterised in that**
on the side of the corrugated spring sheet (14) facing away from the cushion (13) a plurality of eccentric rolls (29) are arranged and can rotate on the seat and leaning frames (22, 23) in such manner that each eccentric roll (29) extending transversely across the corrugated spring sheet (14) rests in contact with an corrugation peak (142) and the eccentric rolls (29) can be driven, preferably by a toothed belt.

11. Fitting according to any of Claims 5 to 10,
**characterised in that**
in the area of the leaning frame (23) the spring elements, preferably tension springs (16), are attached to a plurality of adjustment elements (30) mounted on the leaning frame (23), which are formed so that they can be displaced in the seat direction.

12. Fitting according to Claim 11,
**characterised in that**
the adjustment elements (30) can be driven pneumatically, electrically, hydraulically or mechanically.

13. Fitting according to any of Claims 1 to 12,
**characterised in that**
the corrugated spring sheet (14) is divided between the seat frame (22) and the leaning frame (23), and the sections of the corrugated spring sheet are fastened separately in the seat and leaning frames (22, 23).

## Revendications

1. Dispositif d'assise et/ou de couchage, en particulier siège de véhicule terrestre ou aérien, avec un cadre inférieur (10) stable, formé d'un cadre d'assise (22), d'une partie d'assise (20), et d'un cadre de dossier (23), lui étant relié et appartenant à un dossier (21), et avec une partie de base (12) réalisée avec une rigidité transversale et une flexibilité longitudinale, **caractérisé en ce que** la partie de base (12) est formée par une tôle élastique (14) ondulée mince, dont l'ondulation s'étend dans la direction longitudinale du siège et avec un bord d'extrémité avant (143) avant, s'étendant transversalement par rapport à l'ondulation sur une entretoise avant (221) du cadre d'assise (22), et avec un bord d'extrémité arrière (144), s'étendant transversalement par rapport à l'ondulation, accrochée à un montant transversal supérieur (231) du cadre de dossier (23), et **en ce que**, sur la tôle élastique ondulée (14), est posé un coussin de rembourrage (13), subdivisé en un tronçon formant un coussin d'assise (131) et un tronçon formant un coussin de dossier (132), qui sont réalisés de préférence d'une seule pièce ensemble.

2. Dispositif selon la revendication 1, **caractérisé en ce que** le cadre inférieur (10) est susceptible de basculer autour d'un axe de pivotement (24) s'étendant transversalement par rapport à la direction d'assise.

3. Dispositif selon la revendication 1 ou 2, **caractérisé en ce qu'**un dispositif de réglage (26), agissant sur la tôle élastique ondulée (14) pour obtenir son déplacement longitudinal dans la direction de l'ondulation, est disposé sur le cadre d'assise (22).

4. Dispositif selon la revendication 3, **caractérisé en ce que**, près de l'entretoise transversale avant (221) du cadre d'assise (22), est monté à rotation un rouleau d'entraînement (27) s'étendant transversalement sur la tôle élastique ondulée (14), rouleau d'entraînement s'engageant, par un profil en came adapté au profil d'ondulation, dans la tôle élastique ondulée (14), et **en ce que** la tôle élastique ondulée (14) est guidée en partie autour du rouleau d'entraînement (27) et est tendue, par ses bords d'extrémité (143, 144) s'étendant transversalement, par l'intermédiaire d'éléments élastiques (25), sur le cadre d'assise (22) et le cadre de dossier (23).

5. Dispositif selon l'une des revendications 1 à 4, **caractérisé en ce que** la tôle élastique ondulée (14) est fixée, sur ses bords longitudinaux (145) s'étendant parallèlement à l'ondulation, sur le cadre inférieur (10), à l'aide d'éléments ayant l'élasticité de ressort, de préférence des ressorts de traction (16).

6. Dispositif selon l'une des revendications 1 à 5, **caractérisé en ce que** le profil d'ondulation de la tôle élastique ondulée (14) est de forme rectangulaire, triangulaire, ou sinusoïdale.

7. Dispositif selon l'une des revendications 1 à 6, **caractérisé en ce que**, à l'ondulation de la tôle élastique ondulée (14), est superposée une ondulation ayant une période d'ondulation notablement plus petite.

8. Dispositif selon l'une des revendications 1 à 7, **caractérisé en ce que** des tuyaux (15; 28) remplis d'air sont insérés dans les creux d'ondulation (142), vus depuis le coussin (13), de la tôle élastique ondulée (14).

9. Dispositif selon la revendication 8, **caractérisé en ce que** les tuyaux à air (15; 28) sont raccordés à un dispositif d'air comprimé, pour régler individuellement, à volonté, leur pression d'air.

10. Dispositif selon l'une des revendications 1 à 9, **caractérisé en ce que**, sur le côté, opposé au coussin (13), de la tôle élastique ondulée (14) est disposée une pluralité de rouleaux excentriques (29), par un montage permettant une rotation sur les cadres d'assise et de dossier (22, 23), **en ce que** chaque rouleau excentrique (29), s'étendant transversalement sur la tôle élastique ondulée (14), appuie sur un sommet d'ondulation (142), et **en ce que** les rouleaux d'excentrique (29) sont susceptibles d'être entraînés de préférence par l'intermédiaire d'une courroie dentée.

11. Dispositif selon l'une des revendications 5 à 10, **caractérisé en ce que**, dans la zone du cadre de dossier (23) est effectuée la fixation des éléments ayant l'élasticité d'un ressort, de préférence des ressorts de traction (16), sur une pluralité d'organes de réglage (30), maintenus sur le cadre de dossier (23), qui sont déplaçables dans la direction d'assise.

12. Dispositif selon la revendication 11,
**caractérisé en ce que** les organes de réglage (30) peuvent être entraînés de façon pneumatique, électrique, hydraulique ou mécanique.

13. Dispositif selon l'une des revendications 1 à 12, **caractérisé en ce que** la tôle élastique ondulée (14) est subdivisée entre le cadre d'assise (22) et le cadre de dossier (23), et les tronçons de tôle élastique ondulée sont chacun fixés séparément dans le cadre d'assise et de dossier (22, 23).
